# EUROPÄISCHE PATENTANMELDUNG

(11) **EP 2 197 171 A2**
(43) Veröffentlichungstag der Anmeldung: **16.06.2010**
(21) Anmeldenummer: 09170292.8
(22) Anmeldetag: 15.09.2009
(51) Int. Cl.: H04L 29/06, G06Q 50/00, A01D 41/00, H04L 29/08, A01D 41/02, G06Q 10/00

(54) **Verfahren zur Unterstützung der Automatisierung landwirtschaftlicher Leistungen**

(30) Priorität: 10.12.2008 DE 102008061252
(71) Anmelder: CLAAS Selbstfahrende Erntemaschinen GmbH, 33428 Harsewinkel (DE)
(72) Erfinder: Kluge, André, 33335, Gütersloh (DE)

(57) **Zusammenfassung**

Die Erfindung betrifft ein Verfahren zur Unterstützung der Automatisierung landwirtschaftlicher Leistungen mit den Schritten:
- Erfassen von Daten,
- Weiterverarbeiten der erfassten Daten zu einem Kontextprofil (520) auf Basis von Kontextverarbeitungsregeln (510),
- Auswählen von Prozessinformationen (560) in Abhängigkeit von dem Kontextprofil (520) auf Basis von Prozesszuordnungsregeln (540) und
- Durchführen einer landwirtschaftlichen Leistung in Abhängigkeit der ausgewählten Prozessinformationen (560).

Dadurch wird es ermöglicht die Durchführung landwirtschaftlicher Leistungen weitgehend zu automatisieren.

## Beschreibung

Die Erfindung betrifft ein Verfahren zur Unterstützung der Automatisierung landwirtschaftlicher Leistungen, mit dem Schritt Erfassen von Daten gemäß Oberbegriff von Anspruch 1.

Die Erfindung betrifft weiterhin eine Landmaschine, umfassend eine Steuereinheit, die ausgebildet ist, landwirtschaftliche Leistungen in Abhängigkeit von Prozessinformationen durchzuführen, eine oder mehrere Datenerfassungsvorrichtungen, die ausgebildet sind, Daten zu erfassen, gemäß Oberbegriff von Anspruch 18 sowie ein System zur Unterstützung der Automatisierung landwirtschaftlicher Leistungen, mit einer Sendeeinheit und einer Empfangseinheit, die ausgebildet sind, mit einer oder mehreren Landmaschinen zu kommunizieren, gemäß Oberbegriff von Anspruch 19.

In der Landwirtschaft sind verschiedene landwirtschaftliche Leistungen möglichst effizient zu erbringen. Solche landwirtschaftlichen Leistungen können Ernte- und Arbeitsleistungen umfassen, wie beispielsweise Abernten einer Anbaufläche, Bergen von Erntegut, Weiterverarbeitung von Erntegut, Bodenbearbeitung, Ausbringen von Hilfsstoffen etc.

Die Durchführung landwirtschaftlicher Leistungen erfordert meist einen Vielzahl von Aktionen durch einen Nutzer, beispielsweise den Maschinenführer einer Landmaschine oder den Betreiber eines landwirtschaftlichen Unternehmen. Um die Effizienz von landwirtschaftlichen Leistungen zu erhöhen, wird daher eine Vereinfachung der Durchführung landwirtschaftlicher Leistungen angestrebt.

Dazu beschreibt die DE 10 2004 034 799 A1 ein Kommunikationssystem für mobile und stationäre Einrichtungen, wobei die mobilen und stationären Einrichtungen über zumindest eine Sende- und Empfangseinheit verfügen, die einen definierten Sende- und Empfangsbereich umfasst, und wobei die wenigstens teilweise Überdeckung der Sende- und Empfangsbereiche der mobilen und/oder stationären Einrichtungen eine zufällige Kommunikation zwischen diesen hervorruft und diese zufällige Kommunikation in eine zielgerichtete Kommunikation übergeht. Dieses System kann dazu beitragen, die Kommunikation zwischen mobilen und stationären Einrichtungen beispielsweise einer Erntekette zu vereinfachen. Es besteht jedoch weiterhin Verbesserungsbedarf hinsichtlich einer effizienteren Durchführung von landwirtschaftlichen Leistungen.

Die DE 10 2004 043 169 A1 beschreibt ein auf elektronischem Datenaustausch basierendes System zur Beschaffung von Informationen zur Abarbeitung von Prozessen, das dadurch gekennzeichnet ist, dass die Beschaffung der Informationen mittels zumindest einer Anwendung erfolgt und die Anwendung situationsbezogen Informationen beschafft. Damit kann ein Nutzer des Informationsbeschaffungssystems zumindest teilweise von der qualifizierten Beschaffung der Informationen entlastet werden, was die Durchführung von landwirtschaftlichen Leistungen erleichtern kann. Es besteht jedoch Bedarf nach einer weiteren Vereinfachung der Durchführung von landwirtschaftlichen Leistungen.

Insgesamt besteht daher ein Bedarf nach einem Verfahren, das die Durchführung von landwirtschaftlichen Leistungen vereinfacht und/oder eine effizientere Durchführung von landwirtschaftlichen Leistungen ermöglicht. Es besteht weiterhin ein Bedarf nach einem Verfahren, das das Auftreten von Fehlern bei der Durchführung von landwirtschaftlichen Leistungen reduziert.

Es ist daher die Aufgabe der vorliegenden Erfindung, die Nachteile des Standes der Technik zu überwinden und insbesondere den genannten Bedarf zumindest teilweise zu decken.

Diese Aufgabe wird gelöst durch ein eingangs genanntes Verfahren, das durch die folgenden Schritte gekennzeichnet ist:
- Weiterverarbeiten der erfassten Daten zu einem Kontextprofil auf Basis von Kontextverarbeitungsregeln,
- Auswählen von Prozessinformationen in Abhängigkeit von dem Kontextprofil auf Basis von Prozesszuordnungsregeln und
- Durchführen einer landwirtschaftlichen Leistung in Abhängigkeit der ausgewählten Prozessinformationen.

Der erfindungsgemäßen Lösung liegt die Erkenntnis zugrunde, dass die Durchführung landwirtschaftlicher Leistungen vom jeweiligen Kontext abhängt. Ein Kontext wird im Sinne der vorliegenden Erfindung durch ein Kontextprofil beschrieben. Ein Kontextprofil stellt eine Menge von Daten dar, die z.B. eine bestimmte Situation oder bestimmte Umfeld- bzw. Rahmenbedingungen kennzeichnen. Ein Kontextprofil kann, wie noch erläutert wird, beispielsweise auf sensorbasierten Daten zu Identität, geografischer Position und Betriebszustand einer Landmaschine aufbauten. Die Anwendung von Kontextverarbeitungsregeln bedeutet dass die Weiterverarbeitung der erfassten Daten regelbasiert erfolgt. Kontextverarbeitungsregeln können Informationen der Art "Wenn A, dann B" enthalten und allgemeine Gesetze darstellen, aus denen Schlussfolgerungen für konkrete Situationen gezogen werden. Die Kontextverarbeitungsregeln können von einem oder mehreren Nutzern aufgestellt, geändert und/oder gelöscht werden.

Auf eine Landmaschine bezogen können die erfassen Daten beispielsweise aussagen, dass es sich bei der Landmaschine um einen Mähdrescher handelt, der sich zu einem bestimmten Zeitpunkt an einer bestimmten Position befindet und mit einer bestimmten Geschwindigkeit fährt. Eine Interpretation dieser Daten anhand von Kontextverarbeitungsregeln kann beispielsweise zu dem Kontextprofil führen, dass dieser Mähdrescher bereit ist, ein Feld abzuernten.

Für einen selbstfahrenden Feldhäcksler können die erfassten Daten beispielsweise neben Identität und Zeit die geografische Position, den Betriebszustand von Motor, Hauptantrieb und Arbeitsstellung umfassen. Auf Basis von Kontextverarbeitungsregeln kann für den selbstfahrenden Feldhäcksler der Kontext "Prozesszeit" abgleitet werden, wenn die geografische Position des Feldhäckslers mit der geografischen Position eines abzuerntenden Feldes übereinstimmt, sich die Position des Häckslers auf dem Feld ändert, d.h. der Häcksler fährt, und Motor, Hauptantrieb und Arbeitsantrieb eingeschaltet sind.

Landwirtschaftliche Leistungen im Sinne der vorliegenden Erfindung sind beispielsweise Ernte- und Arbeitsleistungen, wie Abernten einer Anbaufläche, Bergen von Erntegut, Weiterverarbeitung von Erntegut, Bodenbearbeitung, Ausbringen von Hilfsstoffen etc. Landwirtschaftliche Leistungen im Sinne der vorliegenden Erfindung können auch Teilleistungen oder Leistungsmodule, wie beispielsweise Mähen, Wenden, Schwaden, Häckseln, Transportieren, Einlagern, umfassen.

Landwirtschaftliche Leistungen im Sinne der vorliegenden Erfindung können innerbetrieblich oder überbetrieblich erbracht werden. Eine innerbetriebliche landwirtschaftliche Leistung liegt beispielsweise vor, wenn ein Landwirt im eigenen Unternehmen eine Ernteleistung erbringt. Eine überbetriebliche landwirtschaftliche Leistung liegt beispielsweise vor, wenn ein landwirtschaftlicher Dienstleister, wie etwa ein Lohnunternehmer, eine Ernteleistung für einen Landwirt oder eine kommunale Einrichtung erbringt.

Landwirtschaftliche Leistungen können beispielsweise durch Landmaschinen durchgeführt werden. Landmaschinen im Sinne der vorliegenden Erfindung können sämtliche Arten von landwirtschaftlichen Ernte- bzw. Arbeitsmaschinen und in der Landwirtschaft eingesetzten Fahrzeugen sein sowie Geräte dafür. Landmaschinen im Sinne der vorliegenden Erfindung sind beispielsweise Erntemaschinen, Bodenbearbeitungsgeräte, Dünge- und Säeinheiten, Schlepper in Kombination etwa mit Transport- oder Pritschenanhängern oder Ballenpresse, Anbaugeräte oder Vorsätze.

Wie noch näher erläutert wird, umfassen Prozessinformationen im Sinne der vorliegenden Erfindung beispielsweise die Durchführung landwirtschaftlicher Leistungen, Betriebsparameter dafür und/oder die Steuerung von Informationsflüssen. Insbesondere können die Prozessinformationen auch genutzt werden, um eine Landmaschine zu steuern, d.h. eine landwirtschaftliche Leistung mittels einer Landmaschine auf Basis der Prozessinformationen zu erbringen. Zu Prozessinformationen im Sinne der vorliegenden Erfindung zählen auch für die Durchführung landwirtschaftlicher Leistungen erforderliche Managementleistungen, wie beispielsweise Dokumentation und Abrechnung von Ernte- oder Arbeitsleistungen, das Steuern von Informationsflüssen, beispielsweise zwischen Landmaschinen und einem Farmmanagementsystem, oder die Steuerung von Art und Menge zu erfassender und/oder abzuspeichernder Daten.

Die erfindungsgemäße Lösung sieht vor, dass beispielsweise die Prozessinformationen, nach denen die Landmaschine gesteuert wird, in Abhängigkeit von dem zuvor ermittelten Kontextprofil anhand von Prozesszuordnungsregeln ausgewählt werden. Dies bedeutet, dass der von einer Landmaschine durchzuführende Prozess vom Kontext abhängt, in dem sich die Landmaschine befindet. Die Prozesszuordnungsregeln bestimmen dabei, welche Prozessinformationen für die Landmaschine mit ihrem Kontextprofil in Frage kommen. Die Anwendung von Prozesszuordnungsregeln bedeutet, dass die Auswahl von Prozessinformationen regelbasiert erfolgt. Prozesszuordnungsregeln können Informationen der Art "Wenn A, dann B" enthalten und allgemeine Gesetze darstellen, aus denen Schlussfolgerungen für konkrete Situationen gezogen werden. Die Prozesszuordnungsregeln können von einem oder mehreren Nutzern aufgestellt, geändert und/oder gelöscht werden.

Beispielsweise kommt für das genannte erste Beispiel, bei dem ein Mähdrescher auf ein abzuerntendes Feld zufährt, die Prozessinformation feld Abernten mit einer bestimmten Fahrgeschwindigkeit" in Betracht, nicht aber die Prozessinformation "Häckseln mit einer bestimmten Schrittlänge". Die Prozesszuordnungsregeln stellen sicher, dass nur für das jeweilige Kontextprofil relevante Prozessinformationen ausgewählt werden.

Im zweiten Beispiel kann für den selbstfahrenden Feldhäcksler mit dem Kontext "Prozesszeit" beispielsweise die Prozessinformation ausgewählt werden, dass die Daten über die eingestellte Schnittlänge und die Fahrgeschwindigkeit erfasst und abgespeichert werden sollen, so lange der Kontext "Prozesszeit" andauert.

Der Erfindung liegt dabei weiterhin die Erkenntnis zugrunde, dass die kontextbasierte Auswahl von Prozessinformationen eine weitgehende Automatisierung der Durchführung landwirtschaftlicher Leistungen ermöglicht, die diese Durchführung der landwirtschaftlichen Leistung vereinfacht, effizienter gestaltet und gleichzeitig das Auftreten von Fehlern verringert. Dadurch, dass die Weiterverarbeitung bzw. Ergänzung der erfassten Daten zu Kontextprofilen anhand von Kontextverarbeitungsregeln und die Auswahl von Prozessinformationen anhand von Prozesszuordnungsregeln erfolgt, kann die Notwendigkeit von Nutzereingaben deutlich reduziert werden.

Die im Stand der Technik vor jeder Durchführung einer landwirtschaftlichen Leistung erforderlichen aufwändigen Eingaben des Nutzers, wie beispielsweise Aktivieren einer Schlagkartei, Navigieren zu einem bestimmten Schlag innerhalb der Kartei, Definieren der auszuführenden Tätigkeiten, können somit im erfindungsgemäßen Verfahren entfallen. Die Landmaschine kann vielmehr, in Abhängigkeit von erfassten Daten, wie ihrer Identität, ihrer Position und ihres Betriebszustands sowie von Zeitinformationen, autonom ihr Kontextprofil ermitteln und auf Basis des Kontextprofils Prozessinformationen auswählen und durchführen ohne dass ein Nutzer Informationen ergänzen muss. Für einen Nutzer, der im Sinne der vorliegenden Erfindung beispielsweise ein Landwirt, ein Lohnunternehmer oder ein Maschinenbediener sein kann, stellt dies eine erhebliche Erleichterung dar.

Im genannten ersten Beispiel ist es beispielsweise nicht erforderlich, dass ein Nutzer den entsprechenden Schlag in der Schlagkartei auswählt und die auszuführenden Tätigkeiten definiert, da das Kontextprofil der Landmaschine einerseits die geografische Position beinhaltet und daraus auf Basis der Kontextverarbeitungsregeln abgeleitet wird, auf welchem Schlag sie sich befindet, und andererseits aus dem Kontextprofil der Landmaschine weiterhin auf Basis der Prozesszuordnungsregeln abgeleitet wird, welche Prozessinformationen anzuwenden sind. Im genannten zweiten Beispiel ist es beispielsweise nicht erforderlich, dass ein Nutzer die Dokumentation von Schnittlänge und Fahrgeschwindigkeit manuell initiiert. Auf diese Weise können auch Fehler, wie beispielsweise die Erfassung falscher Daten, unzureichender Daten oder ein zu später Beginn der Datenerfassung vermieden werden.

Da die Kontextverarbeitungsregeln und die Prozesszuordnungsregeln bevorzugt auf Richtigkeit und Vollständigkeit geprüft sind, erfolgt die Ermittlung der Kontextprofile und die Auswahl der Prozessinformationen in vorteilhafter Weise fehlerärmer als durch eine manuelle Ermittlung und Auswahl durch einen Nutzer. Die Vielzahl an erforderlichen Informationen begünstigt bei manueller Eingabe und Abfrage das Entstehen von Fehlern und erschwert eine korrekte Interpretation der Informationen durch einen Nutzer. Die erfindungsgemäße regelbasierte Ermittlung von Kontextprofilen und die erfindungsgemäß ebenfalls regelbasierte Auswahl der Prozessinformationen auf Basis der Kontextprofil entbindet den Nutzer von der fehleranfälligen Eingabe und Interpretation einer Vielzahl von Daten. Damit kann das erfindungsgemäße Verfahren auch in vorteilhafter Weise dazu beitragen, Qualität und Sicherheit der Durchführung landwirtschaftlicher Leistungen zu erhöhen, da die Wahl falscher Prozessinformationen wie auch die ineffiziente Einstellung von Prozessparametern durch einen Nutzer vermieden werden kann.

Das erfindungsgemäße Verfahren hat weiterhin den Vorteil, dass eine Vielzahl von Daten innerhalb kürzester Zeit zu Kontextprofilen verarbeitet und dazu Prozessinformationen aus einer Vielzahl von Prozessinformationen ausgewählt werden können. Auch hängt die Auswahl der Prozessinformationen und Prozessparameter nicht mehr von der Erfahrung und dem Wissen eines Nutzers ab. Bevorzugt enthalten die bereitgestellten Prozessinformationen bereits für das jeweilige Kontextprofil optimierte Informationen, so dass eine möglichst effiziente Durchführung der landwirtschaftlichen Leistungen sichergestellt wird.

Das erfindungsgemäße Verfahren ermöglicht es somit, die Durchführung landwirtschaftlicher Leistungen weitgehend zu automatisieren, da das erfindungsgemäße System die erfassten Daten regelbasiert in Kontextprofil umwandelt und wiederum regelbasiert die Landmaschine mit für ihren konkreten Kontext angepassten Prozessinformationen versorgt. Nutzerinteraktionen werden durch das erfindungsgemäße Verfahren weitgehend reduziert bzw. können ganz entfalten.

Die Erfindung kann dadurch fortgebildet werden, dass die Daten zumindest teilweise mittels Erfassungsvorrichtungen einer Landmaschine erfasst werden. Erfassungsvorrichtungen einer Landmaschine sind beispielsweise Sensoren oder der Bordcomputer einer Landmaschine. Ein Kontext wird im Sinne der vorliegenden Erfindung durch ein Kontextprofil beschrieben, das auf Daten aufbaut, die bevorzugt von einer Landmaschine, beispielsweise durch bestimmte Sensoren, erfasst werden. Ein Sensor kann beispielsweise Guteigenschaften, wie Feuchte, erfassen oder Betriebsparameter, wie Schrittlänge, Aus dem Bordcomputer können beispielsweise Daten zur Fahrgeschwindigkeit ausgelesen werden, die ihrerseits wiederum über Sensoren ermittelt und an den Bordcomputer weitergeleitet sein können. Das Vorsehen mehrerer Datenerfassungseinrichtungen und das Einbeziehen der damit erfassten Daten in die Ableitung eines Kontextprofils kann die Qualität und den Informationsgehalt des Kontextprofil verbessern.

Die Erfindung kann dadurch fortgebildet werden, dass zumindest die folgenden erfassten Daten zu dem Kontextprofil weiterverarbeitet werden: Identität, Position und Betriebszustand einer Landmaschine sowie Zeitinformationen.

Wenn mindestens Daten zur Identifikation, zur geografischen Position und zum Betriebszustand einer Landmaschine sowie Zeitinformationen vorliegen, kann daraus erfindungsgemäß ein Kontextprofil abgeleitet werden, das diese Daten anhand von Kontextverarbeitungsregeln interpretiert. Ein aus diesen Daten abgeleitetes Kontextprofil stellt in vorteilhafter Weise Informationen über einen Kontext der Landmaschine bereit, der es erlaubt, relevante Schlüsse auf die in diesem Kontext durchzuführenden Prozesse zu ziehen. Zeitinformationen können beispielsweise Zeitstempel sein, aus denen Dauern, beispielsweise für eine Bearbeitung oder einen Transport, abgeleitet werden können.

Ein Kontextprofil kann sich weiterhin dadurch auszeichnen, dass durch die Verarbeitung bzw. Ergänzung der erfassten Daten eine höherwertige Information erzeugt wird. Diese höherwertige Information kann im genannten ersten Beispiel etwa darin liegen, dass die Position des Mähdreschers mit der Position eines abzuerntenden Feldes abgeglichen wird mit der Schlussfolgerung, dass der Mähdrescher auf ein abzuerntendes Feld zufährt. Die Kontextinterpretation kann umfassen, dass die Dauer berechnet wird, die der Mähdrescher braucht, um das Feld zu erreichen. Weiterhin kann die Kontextinterpretation darin bestehen, dass die Leistungsfähigkeit des Mähdreschers anhand seiner Identifikation bestimmt und mit der für das abzuerntende Feld erforderlichen Leistungsfähigkeit abgeglichen wird, Ein Kontextprofil kann daher beispielsweise die Information beinhalten, dass ein bestimmter, identifizierter Mähdrescher bereit ist, ein bestimmtes Feld zu einer bestimmten Zeit abzuernten.

Im genannten zweiten Beispiel kann ein höherwertiges Kontextprofil beispielsweise auch die Information beinhalten, welche Feldbetriebszeit des Feldhäckslern vorliegt, wenn die Prozesszeit mit zuvor ermittelten weiteren Feldbetriebszeiten zu einer Gesamtfeldbetriebszeit aggregiert wird. Auf diesem Kontextprofil kann beispielsweise mittels Prozesszuordnungsregeln die Prozessinformation ausgewählt werden, dass eine Wartung stattfinden soll, wenn eine maximale Feldbetriebszeit des Feldhäckslers erreicht oder überschritten ist.

Die Erfindung kann dadurch fortgebildet werden, dass weiterhin die folgenden erfassten Daten zu dem Kontextprofil weiterverarbeitet werden: Betriebsparameter einer Landmaschine und/oder auf die landwirtschaftliche Leistung bezogene Leistungskennwerte und/oder Guteigenschaften, beispielsweise Eigenschaften eines Ernteguts und/oder eines zu bearbeitenden Guts, und/oder Umfeldinformationen, beispielsweise agrarmeteorologische Daten, und/oder Identität und/oder Position und/oder Betriebszustand und/oder Betriebsparameter einer oder mehrere weiterer Landmaschine.

Die erfindungsgemäße Fortbildung sieht demnach vor, dass die erfassten Daten und/oder zu erfassende Daten die genannten weiteren Daten umfassen. Die Erfassung weiterer Daten kann die Auswertbarkeit und den Informationsgehalt der daraus abgeleiteten Kontextprofile in vorteilhafter Weise erhöhen.

Dies ist insbesondere vorteilhaft vor dem Hintergrund der Besonderheit der Landwirtschaft, dass die Wirtschaftlichkeit bzw. Effizienz landwirtschaftlicher Leistungen und Eigenschaften, wie Menge und Qualität der erzeugten und verarbeiteten landwirtschaftlichen Produkte, nicht nur von den eingesetzten Landmaschinen und deren Zusammenwirken, sondern auch von komplexen, nicht beeinflussbaren natürlichen Faktoren abhängen. Dadurch entstehen starke Schwankungen sowohl bezüglich der Guteigenschaften, beispielsweise des zu bearbeitenden Ernteguts bzw. der Anbaufläche oder des Bodens, als auch hinsichtlich des Umfelds, wie beispielsweise der vorherrschenden Witterung. Es ist daher bevorzugt, auch Daten über die Guteigenschaften und/oder das Umfeld zu erfassen. Da sich das erfindungsgemäße Verfahren gleichermaßen auf Ernteleistungen wie auf Arbeitsleistungen bezieht, ist als Gut im Sinne der vorliegenden Erfindung daher sowohl Erntegut bei Ernteleistungen, wie beispielsweise Getreide oder Grünfutter, als auch zu bearbeitendes Gut bei Arbeitsleistungen, wie beispielsweise zu bearbeitender Boden oder zu düngende Pflanzen, zu verstehen. Ein Gut im Sinne der vorliegenden Erfindung kann auch ein für eine landwirtschaftliche Leistung benötigtes Gut, wie etwa Wasser, Dünger, Gülle oder Saatgut, sein. Die Guteigenschaften können beispielsweise vor, während oder nach Gutbearbeitung und/oder während der Weiterverarbeitung des Guts erfasst werden.

Um den Erfolg einer landwirtschaftlichen Unternehmung zu überwachen kann es von Interesse sein, auf die landwirtschaftliche Leistung bezogene Leistungskennwerte zu ermitteln, die Rückschlüsse auf die Wirtschaftlichkeit bzw. Effizienz der durchgeführten landwirtschaftlichen Leistung zulassen. Solche auf die landwirtschaftliche Leistung bezogenen Leistungskennwerte können beispielsweise Effektivitäts- und Produktivitätskennzahlen von Landmaschinen und/oder vergleichbare Kosten der Arbeitserledigung der landwirtschaftlichen Leistung sein.

Betriebsparameter können beispielsweise Schnitthöhe oder -länge eines Häcksler oder Trommel- oder Rotorendrehzahl eines Mähdreschers sein.

In besonders vorteilhafter Weise kann das Kontextprofil einer Landmaschine auch Informationen beinhalten, die eine Landmaschine in Relation zu anderen Landmaschinen darstellen und die Auswahl von Prozessinformationen ermöglichen, die eine Interaktion dieser Landmaschinen vorsehen. Dabei ist es insbesondere bevorzugt, wenn auch Daten von einer oder mehreren weiteren Landmaschinen erfasst werden können. Diese Daten können in vorteilhafter Weise zur Abstimmung der Teilnehmer beispielsweise einer Erntekette herangezogen werden.

Die Erfindung kann dadurch fortgebildet werden, dass die Kontextverarbeitungsregeln umfassen: Ergänzen der erfassten Daten und/oder, Weiterverarbeiten der Daten mittels eines Algorithmus und/oder Vergleichen der Daten mit Soll-Daten und/oder Ableiten höherwertiger Informationen aus den erfassten und/oder ergänzten Daten,

Erfasste Daten können auch in noch zu erläuternder Weise durch weitere Daten ergänzt werden, um ein höherwertige Kontextprofil zu erhalten. Die Ableitung höherwertiger Informationen ist insbesondere vorteilhaft, wenn die Daten zueinander in Bezug gesetzt und daraus weitere Erkenntnisse über den Kontext ermittelt werden können. Falls die erfassten Daten nicht vollständig oder fehlerhaft sind, ist es ebenfalls vorteilhaft, die erfassten Daten zu ergänzen.

Erfindungsgemäß können die erfassten Daten unter anderem mittels eines Algorithmus ergänzt bzw. weiterverarbeitet werden. Ein Algorithmus kann beispielsweise eine Handlungsvorschrift darstellen, wie aus den erfassten Daten ein Kontextprofil entsteht und/oder welche Daten noch zusätzlich herangezogen werden müssen, um eine Kontextprofil zu erstellen, Der Algorithmus kann beispielsweise von einem zentralen System oder einem Benutzer vorgegeben und ggf. verändert werden.

Weiterhin kann erfindungsgemäß das Weiterverarbeiten und/oder Ergänzen der erfassten Daten zu einem Kontextprofil auf Basis von Kontextverarbeitungsregeln den Vergleich der erfassten Daten mit Soll-Daten und vorzugsweise auch das Kombinieren der erfassten Daten zu höherwertigen Kontextinformationen in Abhängigkeit von der Übereinstimmung der erfassten Daten mit den Soll-Daten umfassen. Dabei ist weiterhin bevorzugt, dass die Soll-Daten vorgegeben sein können, beispielsweise durch ein zentrales System und/oder eine Benutzereingabe.

Soll-Daten im Sinne der vorliegenden Erfindung sind somit vorzugsweise vorgegebene Daten und stellen weiterhin vorzugsweise die Bandbreite dar, in der die erfassten Daten auftreten können. Je nachdem, welche Daten erfasst werden, stimmen diese mit unterschiedlichen Soll-Daten überein. Die Kontextverarbeitungsregeln bestimmen, welche höherwertigen Kontextinformationen aus den erfassten Daten abgeleitet und zu Kontextprofilen verarbeitet bzw. ergänzt werden, je nachdem, ob und mit welchen Soll-Daten die erfassten Daten übereinstimmen. Diese Fortbildung hat den Vorteil, dass die Kontextverarbeitungsregeln auf spezifische Anforderungen in der Landwirtschaft bzw. auch auf einzelne landwirtschaftliche Unternehmungen angepasst werden können, so dass die Interpretation von erfassten Daten zu Kontextprofilen auf besondere und/oder sich ändernde Anforderungen in der Landwirtschaft allgemein bzw. in einzelnen landwirtschaftlichen Unternehmungen adaptierbar sind.

Höherwertige Informationen können auch durch Ergänzen der erfassen Daten erhalten werden bzw. dadurch, dass die erfassten Daten zu weiteren Daten in Bezug gesetzt werden. Die erfassten Daten eines Feldhäckslers zu geografischer Position können beispielsweise zu der Kontextinformation verarbeitet werden, dass der Feldhäcksler unter Beibehaltung der gegebenen Bedingungen noch zwei Stunden mit dem Abernten des restlichen Feldes beschäftigt sein wird. Ein um agrarmeteorologische Informationen ergänztes höherwertiges Kontextprofil kann beispielsweise die Information enthalten, dass das Feld bereits in einer Stunde abgeerntet sein sollte, da ein Gewitter aufzieht. Die auf Basis dieses höherwertigen Kontextprofils abgeleitete Prozessinformation kann also lauten, die Fahrgeschwindigkeit unter Inkaufnahme eines höheren Energieverbrauchs erhöhen, um das Feld noch in der verbleibenden Zeit vor dem Gewitter Abernten zu können.

Die Erfindung kann dadurch fortgebildet werden, dass die Daten durch Beziehen von Ergänzungsdaten ergänzt werden, wobei die Ergänzungsdaten vorzugsweise von einer anderen Landmaschine, einem zentralen System, einem Diensteanbieter, einer Anwendung, insbesondere einer Farmmanagementanwendung, dem Internet und/oder über eine Nutzereingabe bezogen werden.

Vorzugsweise umfasst das Weiterverarbeiten und/oder Ergänzen der erfassten Daten zu einem Kontextprofil auf Basis von Kontextverarbeitungsregeln das Beziehen von Ergänzungsdaten von den genannten Quellen und das Kombinieren der erfassten Daten mit den Ergänzungsdaten zu höherwertigen Kontextinformationen.

Ergänzungsdaten im Sinne der vorliegenden Erfindung sind Daten, die neben direkt erfassten Daten zur Ableitung von Kontextprofilen herangezogen werden. Ergänzungsdaten sind beispielsweise Ereignisinformationen, Hindernisinformationen, agrarmeteorologische Daten und/oder von anderen Einheiten, wie etwa anderen Landmaschine, erfasste und zur Verfügung gestellte Daten.

Ergänzungsdaten können beispielsweise von einem zentralen System aktiv an eine Landmaschine übersandt werden oder von einer Landmaschine bei einem zentralen System angefordert werden. In gleicher Weise ist auch eine Übersendung bzw. Anforderung zwischen zwei oder mehreren Landmaschinen erfindungsgemäß bevorzugt. Wenn beispielsweise in einem zentralen System oder einer Landmaschine bestimmte Informationen vorliegen, die den Kontext einer (anderen) Landmaschine verändern können, werden diese Informationen vorzugsweise aktiv versandt. Diese Informationen werden dann vorzugsweise zur Generierung eines aktualisierten Kontextprofils verwendet, auf dessen Basis veränderte Prozessinformationen ausgewählt werden können.

Neben der Weiterverarbeitung der erfassen Daten ist das Ergänzen der erfassten Daten eine besonders bevorzugte Form der Ableitung von Kontextprofilen aus den erfassten Daten. Der Informationsgehalt von erfassten Daten kann in der Kombination mit weiteren, extern gewonnenen Daten deutlich erhöht werden.

Die Information beispielsweise über Art und Position bestimmter Hindernisse oder die Angabe über Art und Zeitpunkt eines erwarteten Wetterumschwungs kann in dem zweiten genannten Beispiel etwa zusammen mit der erfassten Position eines Mähdreschers zu einem Kontextprofil führen, das eine bestimmte, noch abzuerntende Fläche identifiziert, für deren Bearbeitung vor dem nächsten Gewitter nur noch eine bestimmte Zeit zur Verfügung steht. Auf diesem Kontextprofil abgeleitete Prozessinformationen sehen beispielsweise eine höhere Fahrgeschwindigkeit des Mähdreschers - ggf. unter Akzeptanz eines höheren Kornverlusts - vor, als aus einem Kontextprofil ohne die ergänzende agrarmeteorologische Information über das nahende Gewitter abgeleitete Kontextinformationen.

Es ist dabei besonders bevorzugt, wenn zur Gewinnung der ergänzenden Daten verschiedene, insbesondere mehrere, Quellen zur Verfügung stehen. Weiterhin ist bevorzugt, dass für den Fall, dass bestimmte erfasste Daten nicht, unvollständig oder fehlerhaft vorliegen, diese Daten ergänzt werden.

Die Erfindung kann dadurch fortgebildet werden, dass die Kontextverarbeitungsregeln abhängig sind von einer vorgegebenen Zielsetzung, vorzugsweise einer maschinensteuerungstechnischen, sicherheitsrelevanten, betriebswirtschaftlichen, arbeitswirtschaftlichen und/oder informationstechnischen Fragestellung.

Dieser erfindungsgemäßen Fortbildung liegt der Gedanke zugrunde, dass die Qualität und der Informationsgehalt von Kontextprofilen besonders hoch sind, wenn die Daten mittels Kontextverarbeitungsregeln in einer bestimmten Weise zueinander in Bezug gesetzt werden. Vor dem Hintergrund der arbeitswirtschaftlichen Fragestellung, wie lange das Abernten einer restlichen Anbaufläche noch dauert, ist die Fahrgeschwindigkeit eines Mähdreschers anders zu verarbeiten als vor dem Hintergrund der maschinensteuerungstechnischen Fragestellung, ob die Fahrgeschwindigkeit optimal eingestellt ist zur Minimierung des Kornverlusts. Vor dem Hintergrund einer betriebswirtschaftlichen Fragestellung kann die Fahrgeschwindigkeit zum Treibstoffverbrauch in Bezug gesetzt werden. Eine sicherheitsrelevante Fragestellung kann die Fahrgeschwindigkeit mit der geografischen Position (z.B. Feld, Straße, Hof) und der jeweils erlaubten Fahrgeschwindigkeit in Bezug setzen. Vor dem Hintergrund einer informationstechnischen Fragestellung kann mit Bezug auf die Position und/oder Arbeitsstellung einer Landmaschine die Fahrgeschwindigkeit dokumentiert werden.

Die Erfindung kann dadurch fortgebildet werden, dass die landwirtschaftsspezifischen Prozessinformationen umfassen: Initiierung, Weiterführung, Veränderung, Unterbrechung und/oder Beendigung der Durchführung eines Prozesses und/oder Durchführung landwirtschaftlicher Leistungen und/oder Betriebsparameter für die Durchführung landwirtschaftlicher Leistungen und/oder Datenerfassung während der Durchführung landwirtschaftlicher Leistungen und/oder Steuerung von Informationsflüssen.

Insbesondere ist bevorzugt, dass die Durchführung eines Prozesses durch die Landmaschine in Abhängigkeit von dem Kontextprofil initiiert, weitergeführt, verändert, unterbrochen und/oder beendet wird. Beginn und Ende sowie Veränderung einer landwirtschaftlichen Leistung bzw. eines Prozesses zur Durchführung einer landwirtschaftlichen Leistung bzw. eines Teils davon hängen ebenfalls vom Kontext ab. Es ist daher bevorzugt, die Durchführung eines Prozesses durch die Landmaschinen vom Kontextprofil abhängig zu maschen. Die Initiierung eines Prozesses bedeutet das Starten eines Prozesses. Eine Unterbrechung unterscheidet sich von einer Beendigung darin, dass ein Prozess nach einer Unterbrechung von ggf. unbekannter Dauer mit den gleichen Prozessparametern wieder aufgenommen werden kann.

Dabei ist insbesondere die Durchführung der folgenden Schritte bevorzugt: Speichern der während der Durchführung der landwirtschaftlichen Leistung erfassten Daten und/oder Übersenden der während der Durchführung der landwirtschaftlichen Leistung erfassten Daten an eine weitere Landmaschine, ein zentrales System und/oder eine Anwendung, insbesondere eine Farmmanagementanwendung. Bevorzugt ist es insbesondere für die Dokumentation und Abrechnung von landwirtschaftlichen Leistungen, wenn die während der Durchführung der Leistungen erfassten Daten weiterhin zur Verfügung stehen. Die Daten können dazu abgespeichert werden und/oder an andere Systeme, Landmaschinen oder Anwendungen übertragen werden. Die Daten können beispielsweise auch an einen Diensteanbieter oder über das Internet übertragen werden.

Weiterhin ist bevorzugt, auch den Informationsaustausch einer Landmaschine mit einer oder mehreren weiteren Landmaschinen und/oder mit einem zentralen System bzw. die entsprechenden Informationsflüsse in Abhängigkeit von dem Kontextprofil zu steuern.

Erfindungsgemäß werden weiterhin Prozessinformationen bereitgestellt, die angeben, welche landwirtschaftlichen Leistungen durchzuführen sind und mit welchen Prozessparametern dies erfolgen soll. Weiterhin geben die Prozessinformationen an, welche Daten während der Durchführung der landwirtschaftlichen Leistungen erfasst werden sollen. Beispielsweise können die Prozessinformationen angeben, dass ein Feld abgeerntet und dabei von einem Mähdrescher mit einer bestimmten Geschwindigkeit befahren werden soll, wobei Informationen zum Kornverlust erfasst werden. Die Prozessinformationen können beispielsweise weiterhin angeben, welche Daten abzuspeichern, zu dokumentieren und/oder weiterzuleiten sind, um eine automatische, auftrags- und auftraggeberindividuelle Abrechnung zu ermöglichen.

Die Erfindung kann dadurch fortgebildet werden, dass die Prozesszuordnungsregeln umfassen: Auswählen von Prozessinformationen mittels eines Algorithmus und/oder Auswählen von Prozessinformationen mittels Referenzkontextprofilen und/oder Auswählen von Prozessinformationen mittels Muster- und/oder Objekterkennung.

Ein Algorithmus kann beispielsweise eine Handlungsvorschrift darstellen, auf Basis welches Kontextprofil welche Prozessinformationen auszuwählen sind. Der Algorithmus kann beispielsweise von einem zentralen System oder einem Benutzer vorgegeben und ggf. verändert werden.

Das Auswählen von Prozessinformationen in Abhängigkeit von dem Kontextprofil auf Basis von Prozesszuordnungsregeln, insbesondere mittels Referenzkontextprofilen, umfasst vorzugsweise: Bereitstellen einer Mehrzahl landwirtschaftsspezifischer Referenzkontextprofile, wobei die Referenzkontextprofile eine dem Kontextprofil entsprechende Datenstruktur aufweisen, und wobei die Prozessinformationen den Referenzkontextprofilen zugeordnet sind, Vergleichen des Kontextprofils mit den Referenzkontextprofilen, Auswählen der dem Referenzkontextprofil zugeordneten Prozessinformationen bei Übereinstimmung des Kontextprofils mit einem der Referenzkontextprofile.

Eine besonders bevorzugte Auswahl auf Basis von Prozesszuordnungsregeln erfolgt anhand von Referenzkontextprofiien. Referenzkontextprofile stellen typischerweise auftretende Kontextprofile dar, für die festgelegt wird, welche Prozessinformationen für dieses Kontextprofil in Betracht kommen. Vorteilhafterweise wird eine Vielzahl von Referenzkontextprofilen angelegt. Wird nun ein bestimmtes Kontextprofil ermittelt, kann erfindungsgemäß durch einen Vergleich dieses Kontextprofils mit den Referenzkontextprofilen das Referenzkontextprofil ermittelt werden, das mit dem Kontextprofil übereinstimmt. Die diesem übereinstimmenden Referenzkontextprofil zugeordneten Prozessinformationen sind dann die für das Kontextprofil auszuwählenden Prozessinformationen. Dabei ist bevorzugt, dass die Referenzkontextprofile in ihrer Datenstruktur, d.h. in der Art der Daten, die sie enthalten, den Kontextprofilen entsprechen, insbesondere um den erfindungsgemäßen Abgleich zwischen Kontextprofilen und Referenzkontextprofilen zu ermöglichen bzw. zu erleichtern,

Muster- bzw. Objekterkennung beinhaltet im Sinne der vorliegenden Erfindung beispielsweise das Erkennen von Prozessmustern im Kontext. Dabei ist es insbesondere von Vorteil, wenn auch bei unvollständigen oder fehlerhaften Kontextprofilen mittels Muster- bzw. Objekterkennung fehlende Kontextinformationen ergänzt und/oder nur teilweise übereinstimmende Kontextinformationen trotzdem sinnvoll zugeordnet werden können, so dass auch für ein unvollständiges oder fehlerhaftes Kontextprofil relevante Prozessinformationen ausgewählt werden können.

Die Erfindung kann dadurch fortgebildet werden, dass die landwirtschaftsspezifischen Prozessinformationen aus einer Mehrzahl von landwirtschaftsspezifischen Prozessinformationen ausgewählt werden. Vorzugsweise wird eine Mehrzahl von landwirtschaftsspezifischen Prozessinformationen bereitgestellt, aus denen die für ein bestimmtes Kontextprofil zutreffenden Prozessinformationen ausgewählt werden.

Die Erfindung kann dadurch fortgebildet werden, dass die Mehrzahl von landwirtschaftsspezifischen Prozessinformationen in Abhängigkeit von einem Initialkontext aus einer größeren Anzahl von Prozessinformationen ausgewählt wird, wobei der Initialkontext ein bestimmtes Kontextprofil ist.

Erfindungsgemäß ist es besonders bevorzugt, dass die erfassten Daten zu einem Initialkontext weiterverarbeitet und/oder ergänzt werden. Dazu kann ein Kontextprofil, beispielsweise zu einem bestimmten Zeitpunkt und in Abhängigkeit von einem bestimmten Ereignis, als Initialkontext definiert werden und die Mehrzahl der bereitgestellten landwirtschaftsspezifischen Prozessinformationen in Abhängigkeit von dem Initialkontext aus einer größeren Anzahl von Prozessinformationen ausgewählt werden.

Diese Fortbildungsform hat den Vorteil, dass für das erfindungsgemäße Verfahren nur die Prozessinformationen bereitstellt werden, die in Abhängigkeit von bestimmten Rahmenbedingungen, dem Initialkontext, in Frage kommen können. So benötigt beispielsweise ein Mähdrescher, dessen Initialkontext die Identifikation als Mähdrescher beinhaltet, keine Prozessinformationen über die nur mit einem Traktor zu kombinierenden Anbaugeräte und der damit durchführbaren Leistungen. Es ist daher bevorzugt, dass aus einer Gesamtheit der Prozessinformationen bzw. einer größeren Anzahl von Prozessinformationen in Abhängigkeit vom Initialkontext nur diejenige Mehrzahl von Prozessinformationen ausgewählt und bereitgestellt wird, die für den konkreten Initialkontext, beispielsweise einer Landmaschine, in Betracht kommen können.

Die Erfindung kann dadurch fortgebildet werden, dass der Initialkontext von einer Landmaschine an ein zentrales System übersandt wird und die in Abhängigkeit von dem Initialkontext aus einer größeren Anzahl von Prozessinformationen ausgewählte Mehrzahl der landwirtschaftsspezifischen Prozessinformationen von dem zentralen System an die Landmaschine übersandt wird.

Erfindungsgemäß ist es besonders bevorzugt, dass der Initialkontext von einer Landmaschine an ein zentrales System übersandt wird und die in Abhängigkeit von dem Initialkontext aus einer größeren Anzahl von Prozessinformationen ausgewählte Mehrzahl der landwirtschaftsspezifischen Prozessinformationen von dem zentralen System an die Landmaschine übersandt wird. Besonders bevorzugt ist es, wenn die Gesamtheit der Prozessinformationen bzw, eine größere Anzahl von Prozessinformationen in einem zentralen System hinterlegt ist, das mit eine Landmaschine kommunizieren kann. Die Landmaschine sendet ihren Initialkontext vorzugsweise an das System und erhält von diesem die Mehrzahl an Prozessinformationen, die relevant ist für den jeweiligen Initialkontext.

Diese Fortbildungsform hat weiterhin den Vorteil, dass die Prozessinformationen im zentralen System aktualisiert werden können, so auf Basis des Initialkontextes immer aktuelle Prozessinformationen an verschiedene Landmaschinen übertragenen werden. Dadurch kann einerseits die Durchführung landwirtschaftlicher Leistungen auf Basis veralteter Prozessinformationen und andererseits der Aufwand zur Aktualisierung der Datenbasis in mehreren Landmaschinen vermieden werden kann. Weiterhin kann in vorteilhafter Weise das manuelle Übertragen von Prozessinformationen auf eine Landmaschine beispielsweise durch eine Chipkarte oder den Anschluss eines Laptops vermieden werden. Die vorzugsweise autonome Kommunikation der Landmaschine mit dem zentralen System und die vorzugsweise ebenfalls autonome Übersendung des Initialkontextes mit Rückempfang der zugehörigen Kontextinformationen führt zu einer vorteilhaften Automatisierung, die die Durchführung der landwirtschaftlichen Leistung erheblich erleichtert und zu Effizienzgewinnen führt.

Die Erfindung kann dadurch fortgebildet werden, dass zumindest die folgenden Schritte wiederholt ausgeführt werden: Erfassen von Daten, Weiterverarbeiten und/oder Ergänzen der erfassten Daten zu einem Kontextprofil auf Basis von Kontextverarbeitungsregeln. Da sich bei der Durchführung landwirtschaftlicher Leistungen das Umfeld, die Rahmenbedingungen und allgemein die Kontextinformationen in der Regel häufig, wenn nicht laufend, verändern, ist es besonders bevorzugt, dass die Erstellung des Kontextprofils und die dazu erforderliche Erfassung von Daten nicht nur einmal, sondern mehrmals erfolgt. Besonders bevorzugt ist es, wenn diese Schritte regelmäßig, beispielsweise in bestimmten Zeitintervallen, wiederholt werden. Ebenfalls bevorzugt ist es, wenn die Schritte in Abhängigkeit von bestimmten Ereignissen oder in Abhängigkeit einer Nutzereingabe wiederholt werden.

Eine weitere bevorzugte Fortbildung der Erfindung ist durch den Schritt gekennzeichnet: Vergleichen des Kontextprofils mit einem zuvor ermittelten Kontextprofil, und ist weiterhin dadurch gekennzeichnet, dass bei einer Abweichung des Kontextprofils von dem zuvor ermittelten Kontextprofil die folgenden Schritte ausgeführt werden: Auswählen von Prozessinformationen in Abhängigkeit von dem Kontextprofil auf Basis von Prozesszuordnungsregeln, Durchführen einer landwirtschaftlichen Leistung in Abhängigkeit der ausgewählten Prozessinformationen. Diese Fortbildungsform ist darauf gerichtet, Veränderungen im Kontext zu erkennen und bei Auftreten von Kontextänderungen, die sich im Kontextprofil erkennen lassen, erneut für das nun nach der Veränderung aktuelle Kontextprofil die relevanten Prozessinformationen auszuwählen und die Landmaschine entsprechend zu steuern. Dies ist insbesondere von Vorteil, da mit einer Kontextveränderung eine Veränderung der durchzuführenden Prozessinformationen verbunden sein kann, so dass es bevorzugt ist, bei jeder Kontextänderung eine erneute Auswahl der Prozessinformationen vorzunehmen. Diese Anforderung von Prozessinformationen in Abhängigkeit von Kontextänderungen kann auch als "Pull-Prinzip" bezeichnet werden.

Zur Generierung eines aktualisierten Kontextprofils, auf dessen Basis erneut Prozessinformationen ausgewählt werden, können auch Ereignisinformationen verwendet werden. Eine entsprechende Nutzung von Ereignisinformationen kann beispielsweise die folgenden Schritte beinhalten: Übersenden von Ereignisinformationen von einem zentralen System an eine Landmaschine, Auswählen von Prozessinformationen in Abhängigkeit von den Ereignisinformationen und Steuern der Landmaschine in Abhängigkeit der ausgewählten Prozessinformationen. Diese Fortbildungsform kann auch als "Push-Prinzip" bezeichnet werden. Dabei liegen in einem zentralen System Informationen zu bestimmten Ereignissen vor, die den Kontext einer Landmaschine verändern können, und werden vorzugsweise an die Landmaschine übersandt, woraufhin von diesen Ereignisinformationen abhängige Prozessinformationen ausgewählt werden.

Eine weitere bevorzugte Fortbildung der Erfindung ist durch die Schritte gekennzeichnet: Anzeigen des Kontextprofils und/oder der ausgewählten Prozessinformationen und ggf. Ausgeben eines Signals und/oder Anfordern einer Freigabe des Kontextprofil und/oder der ausgewählten Prozessinformationen durch einen Nutzer und/oder Bereitstellen einer Möglichkeit zur Änderung Kontextprofil und/oder der ausgewählten Prozessinformationen durch einen Nutzer.

Das erfindungsgemäße Verfahren ermöglicht eine weitgehende Automatisierung der Durchführung der landwirtschaftlichen Leistungen. Während diese Automatisierung insbesondere aus Effizienzgründen gewünscht ist, so kann es weiterhin vorteilhaft sein, einem Nutzer Informationen über die Vorgänge anzuzeigen und/oder entsprechende optische oder akustische Signale auszugeben. Weiterhin kann es bevorzugt sein, einem Nutzer eine Freigabe von automatisiert ausgewählten Prozessinformationen abzuverlangen oder ihm eine Möglichkeit zur Veränderung dieser ausgewählten Prozessinformationen anzubieten. Auf diese Weise wird in vorteilhafter Weise eine Kontrolle der automatisierten Durchführung landwirtschaftlicher Leistungen durch einen Nutzer ermöglicht.

Weitere vorteilhafte Ausführungsvarianten des erfindungsgemäßen Verfahrens ergeben sich durch Kombination der hier erörterten bevorzugten Merkmale.

Ein weiterer Aspekt der Erfindung ist die Verwendung des erfindungsgemäßen Verfahrens bzw. seiner Fortbildungen in einer landwirtschaftlichen Anwendung, insbesondere in einer Landmaschine.

Auf eine Landmaschine bezogen ist das folgende bevorzugte erfindungsgemäße Verfahren zur Unterstützung der Automatisierung landwirtschaftlicher Leistungen, mit den Schritten:
- Steuern von Funktionen einer Landmaschine in Abhängigkeit von Prozessinformationen,
- Erfassen von Daten, wobei die erfassten Daten zumindest umfassen: Identität der Landmaschine, geografische Position der Landmaschine, Betriebszustand der Landmaschine, Zeitinformationen,
gekennzeichnet durch die Schritte:
- Weiterverarbeiten und/oder Ergänzen der erfassten Daten zu einem Kontextprofil auf Basis von Kontextverarbeitungsregeln,
- Bereitstellen einer Mehrzahl landwirtschaftsspezifischer Prozessinformationen, wobei die Prozessinformationen zumindest umfassen: Angabe durchzuführender landwirtschaftlicher Leistungen sowie dafür erforderlicher Prozessparameter, Angabe während der Durchführung der landwirtschaftlichen Leistungen zu erfassender Daten, wobei diese zu erfassenden Daten zumindest umfassen: Identität der Landmaschine, geografische Position der Landmaschine, Betriebszustand der Landmaschine, Zeitinformationen,
- Auswählen von Prozessinformationen in Abhängigkeit von dem Kontextprofil auf Basis von Prozesszuordnungsregeln und
- Steuern der Landmaschine in Abhängigkeit der ausgewählten Prozessinformationen.

Weitere vorteilhafte Ausführungsvarianten dieses erfindungsgemäßen Verfahrens ergeben sich durch Kombination mit den zuvor erörterten bevorzugten Merkmale, Zu den Vorteilen und Ausführungsdetails dieses Verfahrens und seiner Fortbildungen wird auf die zuvor beschriebenen, entsprechenden Aspekte der jeweiligen Merkmale verwiesen.

Ein weiterer Aspekt der Erfindung ist eine Landmaschine der eingangs genannten Art, gekennzeichnet durch eine Datenverarbeitungseinrichtung, die ausgebildet ist, die erfassten Daten auf Basis von Kontextverarbeitungsregeln zu einem Kontextprofil weiter zu verarbeiten und/oder zu ergänzen, und eine Auswahlvorrichtung die ausgebildet ist, Prozessinformationen in Abhängigkeit von dem Kontextprofil auf Basis von Prozesszuordnungsregeln auszuwählen und an die Steuereinheit zu übergeben.

Insbesondere bevorzugt ist eine Landmaschine umfassend eine Steuereinheit, die ausgebildet ist, landwirtschaftliche Leistungen nach Prozessinformationen durchzuführen, und einen oder mehrere Sensoren, die ausgebildet sind, zumindest die folgenden Daten zu erfassen: Identität der Landmaschine, geografische Position der Landmaschine, Betriebszustand der Landmaschine, Zeitinformationen, gekennzeichnet durch
- eine Datenverarbeitungseinrichtung, die ausgebildet ist, die erfassten Daten auf Basis von Kontextverarbeitungsregeln zu einem Kontextprofil weiter zu verarbeiten und/oder zu ergänzen,
- eine Auswahlvorrichtung mit einer Mehrzahl landwirtschaftsspezifischer Prozessinformationen, wobei die Prozessinformationen zumindest umfassen: Angabe durchzuführender landwirtschaftlicher Leistungen sowie dafür erforderlicher Prozessparameter, Angabe während der Durchführung der landwirtschaftlichen Leistungen zu erfassender Daten, wobei diese zu erfassenden Daten zumindest umfassen: Identität der Landmaschine, geografische Position der Landmaschine, Betriebszustand der Landmaschine, Zeitinformationen,
- und wobei die Auswahlvorrichtung ausgebildet ist, Prozessinformationen in Abhängigkeit von dem Kontextprofil auf Basis von Prozesszuordnungsregeln auszuwählen und an die Steuereinheit zu übergeben.

Ein weiterer Aspekt der Erfindung ist ein System der eingangs genannte Art, gekennzeichnet durch eine Vielzahl landwirtschaftsspezifischer Prozessinformationen, wobei die Prozessinformationen einem oder mehreren Initialkontexten zugeordnet sind, und eine Auswahlvorrichtung, die ausgebildet ist, in Abhängigkeit von einem von einer Landmaschinen empfangenen Initialkontext aus der Vielzahl landwirtschaftsspezifischer Prozessinformationen eine Mehrzahl der diesem Initialkontext zugeordneten Prozessinformationen auszuwählen und an die Landmaschine zu senden, von der der Initialkontext empfangen wurde.

Insbesondere bevorzugt ist ein System zur Unterstützung der Automatisierung landwirtschaftlicher Leistungen, mit einer Sendeeinheit und einer Empfangseinheit, die ausgebildet sind, mit einer oder mehreren Landmaschinen zu kommunizieren, gekennzeichnet durch
- eine Vielzahl landwirtschafisspezifischer Prozessinformationen, wobei die Prozessinformationen zumindest umfassen: Angabe durchzuführender landwirtschaftlicher Leistungen sowie dafür erforderlicher Prozessparameter, Angabe während der Durchführung der landwirtschaftlichen Leistungen zu erfassender Daten, wobei diese zu erfassenden Daten zumindest umfassen: Identität der Landmaschine, geografische Position der Landmaschine, Betriebszustand der Landmaschine, Zeitinformationen,
- und wobei die Prozessinformationen einem oder mehreren Initialkontexten zugeordnet sind, wobei ein Initialkontext zumindest umfasst: Identität einer Landmaschine, geografische Position einer Landmaschine, Betriebszustand einer Landmaschine, Zeitinformationen,
- eine Auswahlvorrichtung, die ausgebildet ist, in Abhängigkeit von einem von einer Landmaschine empfangenen Initialkontext eine Mehrzahl der diesem Initialkontext zugeordneten Prozessinformationen an die Landmaschine zu senden, von der der Initialkontext empfangen wurde.

Die erfindungsgemäße Landmaschine und das erfindungsgemäße System weisen Merkmale auf, die sie insbesondere dafür geeignet machen, für ein erfindungsgemäßes Verfahren und seine Fortbildungen verwendet zu werden.

Zu den Vorteilen, Ausführungsvarianten und Ausführungsdetails dieser Landmaschine und dieses Systems und der jeweiligen Fortbildungen wird auf die zuvor beschriebenen, entsprechenden Aspekte derjenigen Verfahren und Fortbildungen verwiesen, die für das System bzw. die Landmaschine relevant sind.

Bevorzugte Ausführungsformen der Erfindung werden beispielhaft anhand der beiliegenden Figuren beschrieben. Es zeigen:
- Figur 1: eine schematische Darstellung einer Anwendung des erfindungsgemäßen Verfahrens,
- Figur 2: das zentrale System und das on-board Systen von Fig. 1 im Überblick,
- Figur 3: vier beispielhafte Kontextprofile eines selbstfahrenden Feldhäcksters.

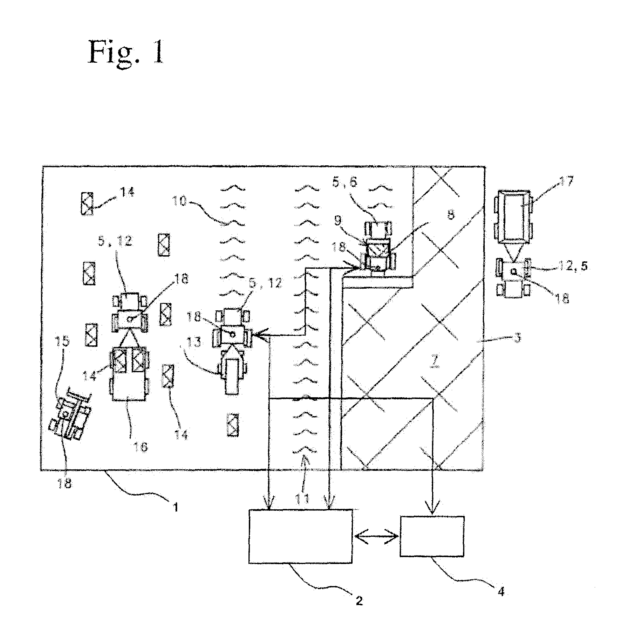

Fig. 1 zeigt schematisch eine Anwendung des erfindungsgemäßen Verfahrens am Beispiel einer landwirtschaftlichen Leistung, nämlich dem Abernten einer Anbaufläche 3 auf einem Feld 1 und der Bergung des Ernteguts. Eine oder auch mehrere als Mähdrescher 6 ausgebildete Landmaschine arbeiten zunächst den auf einer Anbaufläche 3 gewachsenen Bestand 7 ab. Die Fruchtstände des Ernteguts werden auf dem Mähdrescher 6 in einem Korntank 9 zwischengespeichert. Der verbleibende Teil des Ernteguts, das Stroh 10, wird in Schwaden 11 auf der abgeernteten Anbaufläche 3 abgelegt. Eine von einem Schlepper 12 gezogene Ballenpresse 13 verpresst das Stroh 10 zu Ballen 14, die auf der abgeernteten Anbaufläche 3 abgelegt werden. Die Ballen 14 werden beispielsweise mit einem Hubstapler 15 auf von Schleppern 12 gezogene Pritschenanhänger 16 verladen und zur Einlagerung abtransportiert. Die im Korntank 9 zwischengespeicherten Fruchtstände 8 werden von schleppergezogenen Transportanhängern 17 übernommen und zur Einlagerung oder Weiterverarbeitung geführt. Die verschiedenen Landmaschinen 6, 12, 15 verfügen über Sende- und Empfangseinheiten 18, mit der sie mit anderen Landmaschinen 6, 12, 15 und/oder mit einem zentralen System 2 und/oder mit externen Datenquellen 4, wie beispielsweise einem Farmmanagementsystem oder dem Internet, kommunizieren können. Die Sende- und Empfangseinheiten 18 können in der Regel auch GPS-Signale empfangen, die beispielsweise zur Generierung von Daten zur geografischen Position der Landmaschine 6, 12, 15 herangezogen werden. Weiterhin weisen die Landmaschinen 6, 12, 15 on-board-Systeme 5 auf, mittels derer sie erfasste Daten in noch näher zu beschreibender Weise weiterverarbeiten können.

Das erfindungsgemäße Verfahren zur Unterstützung der Automatisierung landwirtschaftlicher Leistungen wird im Folgenden beispielhaft für den Mähdrescher 6 erläutert, Der Mähdrescher 6 kann über mittels seiner Sende- und Empfangseinheit 18 empfangene GPS-Signale seine geografische Position ermitteln. Weiterhin kann der Mähdrescher 6 seinen Betriebszustand ermitteln, der in Fig. 1 dem Abernten der Anbaufläche 3 entspricht. Der Mähdrescher 6 erfasst auch Zeitinformationen, wie beispielsweise einen Zeitstempel, mit dem die weiteren erfassten Daten versehen werden können. Weiterhin erfasst der Mähdrescher 6 über einen Sensor beispielsweise Daten über den Füllstand seines Korntanks. Als externe Informationen kann der Mähdrescher 6 beispielsweise die Identität, die geografische Position und den Betriebszustand der ihn umgebenden Landmaschinen 12, 15 erfassen.

Aus diesen erfassten Daten kann zusammen mit der Identität des Mähdreschers 6 ein Kontextprofil erstellt werden. Dieses Kontextprofil ist abhängig von der Ausprägung der erfassten Daten. Wenn der Betriebszustand beispielsweise wie dargestellt dem Abernten einer Anbaufläche 3 entspricht und der Korntank 9 einen bestimmten Füllstand aufweist, so kann das Kontextprofil beispielsweise die höherwertige Information enthalten, ob die Fruchtstände der restlichen, noch nicht abgeernteten Anbaufläche 3 noch vom Korntank 9 aufgenommen werden können oder nicht. Wenn die Fruchtstände der restlichen, noch nicht abgeernteten Anbaufläche 3 noch vom Korntank 9 aufgenommen werden können, so würde das Kontextprofil des Mähdreschers 6 daher beispielsweise die Information enthalten, dass das Abernten der Anbaufläche 3 fortgesetzt wird ohne dass ein Überladevorgang initiiert wird. In dem Fall, dass die Fruchtstände der restlichen, noch nicht abgeernteten Anbaufläche 3 nicht mehr vollständig vom Korntank 9 aufgenommen werden können, würde das Kontextprofil des Mähdreschers 6 beispielsweise die Information enthalten, dass ein Überladeprozess angefordert wird.

Wenn nun Schlepper 12 mit Transportanhänger 17 in die Prozesskette eintritt, so kann der Schlepper 12 verschiedene Informationen an das zentrale System 2 übertragen. Dabei können Kommunikationsregeln zum Einsatz kommen, die beispielsweise vorsehen, dass regelmäßig (beispielsweise täglich um 10 Uhr) ein Datentransfer (z.B. zum zentralen Farmmanagement-System) stattfindet.

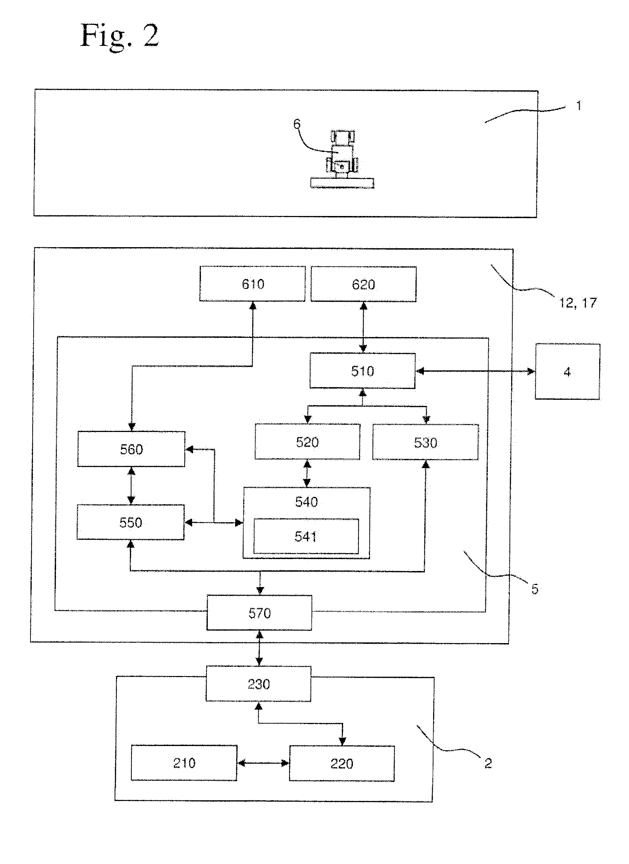

Wie in Fig. 2 dargestellt, kann der Schlepper 12 zunächst einen Initialkontext 530 bestehend zumindest aus Identität, geografischer Position und Betriebszustand sowie Zeitinformationen anhand von Kontextverarbeitungsregeln 510 generieren. Die Daten dazu werden über Sensoren 620 erfasst und/oder von einer externen Datenquelle 4 ergänzt. Diesen Initialkontext 530 kann der Schlepper 12 an das zentrale System 2 mittels der Sende- und Empfangseinheit 570 übertragen.

Im zentralen System 2 ist eine Vielzahl von Prozessinformationen 210 abgelegt. Von einer Auswahleinheit 220 werden in Abhängigkeit von dem vom Schlepper 12 übersandten Initialkontext 530 aus der Vielzahl der Prozessinformationen 210 diejenigen ausgewählt, die für den Schlepper 12 mit dem konkreten Initialkontext 530 relevant sein können und mittels der Sende- und Empfangseinheit 230 an das on-board-System 5 des Schleppers übertragen und dort als Mehrzahl von Prozessinformationen 550 bereitgestellt werden.

Wenn sich der Schlepper 12 dem Feld 1 nähert, ändert sich seine Position und somit auch sein Kontextprofil 520. Das Kontextprofil 520 des Schleppers enthält beispielsweise auch die Information, dass sich auf dem Feld 1 ein Mähdrescher 6 befindet, dessen Korntank zu entladen ist.

Auf Basis dieses Kontextprofil 520 des Schleppers 12 werden anhand von Prozesszuordnungsregeln 540 aus den bereitgestellten Prozessinformationen 550 durchzuführende Prozessinformationen 560 ausgewählt. Dazu wird das Kontextprofil 520 mit Referenzkontextprofilen 541 vergleichen. Wenn das Kontextprofil 520 des Schleppers die Information enthält, dass er sich nahe genug am Feld 1 mit dem abzutankenden Mähdrescher 6 befindet, d.h. den Mähdrescher 6 rechtzeitig vor vollständiger Füllung des Korntanks erreichen kann, sind einem entsprechenden Referenzkontextprofil 541 die Prozessinformationen 560 zugeordnet, dass ein Überladevorgang einzuleiten ist. Diese ausgewählten Prozessinformationen 560 werden der Steuerungseinheit 610 des Schleppers 12 übergeben. In Abhängigkeit von der noch zurückzulegenden Strecke und der Fahrgeschwindigkeiten von Schlepper 12 und Mähdrescher 6 wird die Startposition für den Überladevorgang ermittelt und der Schlepper 12 auf diese Position gesteuert.

Auf diese Weise ist es mit dem erfindungsgemäßen Verfahren möglich, die landwirtschaftliche Leistung des Aberntens einer Anbaufläche zumindest teilweise zu automatisieren, indem die Landmaschinen Mähdrescher 6 und Schlepper 12 mit Transportanhänger 17 autonom aus den von ihnen erfassten und ggf. hinzugezogenen externen Daten Kontextprofile 520 erstellen und Prozessinformationen 560 in Abhängigkeit von diesen Kontextprofilen 520 auswählen. Ein manuelles Anfordern von Überladeunterstützung durch den Maschinenbediener des Mähdreschers 6 und eine anschließende manuelle Disposition eines Überladefahrzeugs 12, 17, beispielsweise durch einen Landwirt, kann somit entfallen.

Weiterhin können sowohl der Schlepper 12 als auch der Mähdrescher 6 in Abhängigkeit vom jeweiligen Kontextprofil 520 Daten über die Durchführung der landwirtschaftlichen Leistungen erfassen, dokumentieren, speichern und/oder weiterleiten, um eine automatisierte Dokumentation und Abrechnung der durchgeführten Leistungen zu ermöglichen und die manuelle Erfassung der Daten durch einen Nutzer weitgehend zu vermeiden.

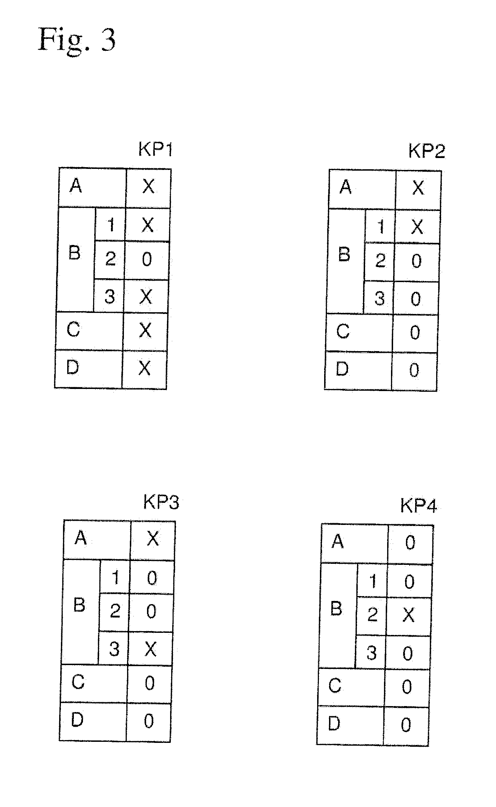

Figur 3 zeigt vier Kontextprofile KP1-KP4 eines selbstfahrenden Feldhäckslers. Ähnlich zu dem Mähdrescher 6 in Fig. 1 kann der selbstfahrende Feldhäcksler in eine Erntekette, beispielsweise eine Grünfuttererntekette, eingebunden sein. Die erfassten Daten A-D der Kontextprofile KP1-KP4 nehmen die Ausprägung X für ja oder 0 für nein an.

A erfasst, ob der Motor des selbstfahrenden Feldhäckslers läuft oder nicht. B repräsentieren Daten zur geografischen Position des Feldhäckslers: B1 steht für die Position des Feldhäckslers auf dem Feld, B2 steht für die Position des Feldhäcksler auf dem Hof und B3 gibt an, ob die Geschwindigkeit des Feldhäckslers größer 0 ist, d.h. ob der Feldhäcksler fährt. C gibt an, ob der Hauptantrieb des Feldhäckslers eingeschaltet ist. Hauptantrieb ist der Antrieb, der zur Durchführung der Leistung eingeschaltet sein muss. D schließlich gibt an, ob die Arbeitsstellung des Feldhäckslers eingeschaltet ist. Die Arbeitsstellung ist die Stellung von Vorsatz- oder Anbaugerät, die zur Durchführung der Leistung eingestellt sein muss. Daten A, C und D stellen somit den Betriebszustand des Feldhäckslers dar. Alle Daten sind mit einem Zeitstempel versehen.

Kontextprofil KP1 steht für den Kontext Feldbetriebszeit, im speziellen Prozesszeit, da sich der Feldhäcksler auf dem Feld befindet (X bei B1), mit eingeschaltetem Motor fährt (X bei A und B3) und auch Hauptantrieb und Arbeitsstellung eingeschaltet sind (X bei C und D). Die für dieses Kontextprofil) auszuwählenden Prozessinformationen können beispielsweise die Erfassung, Speicherung, Auswertung und/oder Weiterleitung von Betriebsparametern und/oder Guteigenschaften umfassen. Ein relevanter Betriebsparameter ist beispielsweise die eingestellte Schnittlänge, eine relevante Guteigenschaft beispielsweise die Feuchte des Ernteguts.

Ebenfalls für den Kontext Feldbetriebszeit steht Kontextprofil KP2, da sich der Feldhäcksler auch hier auf dem Feld befindet (X bei B1). Auch der Motor des Feldhäckslers ist eingeschaltet (X bei A). Allerdings sind Hauptantrieb und Arbeitsstellung ausgeschaltet (0 bei C und D) und der Feldhäcksler fährt nicht (0 bei B3). Kontextprofil KP2 steht somit für Standzeit als spezielle Ausprägung der Feldbetriebszeit. Die Prozessinformationen für dieses Kontextprofil können beispielsweise die Erfassung, Dokumentation, Speicherung und/oder Weiterleitung der Dauer der Feldstandzeit umfassen, um diese Standzeit beispielsweise bei einer Abrechnung - je nach Abrechnungsmodus - berücksichtigen oder herausrechnen zu können.

Kontextprofil KP3 steht für Straßenzeit des Feldhäckslers, da er sich weder auf dem Feld (0 bei B1) noch auf dem Hof (0 bei B2) befindet, aber mit eingeschaltetem Motor fährt (X bei A und B3), Die Prozessinformationen für dieses Kontextprofil können beispielsweise vorsehen, dass nur die Geschwindigkeit des Feldhäckslers erfasst wird, nicht aber weitere Betriebsparameter, um die Menge der erfassten Daten möglichst weit zu reduzieren.

Kontextprofil KP4 hingegen steht für Hofzeit des Feldhäckslers, da er sich auf dem Hof befindet (X bei B2). Dabei fährt der Feldhäcksler nicht (0 bei B3) und Motor, Hauptantrieb und Arbeitsstellung sind ausgeschaltet (0 bei A, C und D). Diesem Kontextprofil zugeordnete Prozessinformationen können beispielsweise eine Meldung, dass der Feldhäcksler für einen Einsatz verfügbar ist, an ein zentrales System und/oder eine andere Landmaschine beinhalten.

### Bezugszeichenliste:

- 1: Feld
- 2: Zentrales System
- 3: Anbaufläche
- 4: Externe Datenquelle
- 5: On-board-System
- 6: Mähdrescher
- 7: Gewachsener Bestand
- 8: Fruchtstände im Korntank
- 9: Korntank
- 10: Stroh
- 11: Schwad
- 12: Schlepper
- 13: Ballenpresse
- 14: Ballen
- 15: Hubstapler
- 16: Pritschenanhänger
- 17: Transportanhänger
- 18: Sende- und Empfangseinheit
- 210: Vielzahl von Prozessinformationen
- 220: Auswahleinheit
- 230: Sende- und Empfangseinheit
- 510: Kontextverarbeitungsregeln
- 520: Kontextprofil
- 530: Initialkontext
- 540: Prozesszuordnungsregeln
- 541: Referenzkontextprofile
- 550: Mehrzahl von Prozessinformationen
- 560: Ausgewählte Prozessinformationen
- 570: Sende- und Empfangseinheit
- 610: Steuerungseinheit
- 620: Sensoren

- KP1: Kontextprofil 1
- KP2: Kontextprofil 2
- KP3: Kontextprofil 3
- KP4: Kontextprofil 4

- A: Motor ein?
- 81: Position = Feld?
- B2: Position = Hof?
- B3: Geschwindigkeit > 0?
- C: Hauptantrieb ein?
- D: Arbeitsstellung ein?
- X: Ja
- 0: Nein

## Patentansprüche

1. Verfahren zur Unterstützung der Automatisierung landwirtschaftlicher Leistungen, mit dem Schritt:
- Erfassen von Daten,
**gekennzeichnet durch** die Schritte:
- Weiterverarbeiten der erfassten Daten zu einem Kontextprofil (520) auf Basis von Kontextverarbeitungsregeln (510),
- Auswählen von Prozessinformationen (560) in Abhängigkeit von dem Kontextprofil (520) auf Basis von Prozesszuordnungsregeln (540) und
- Durchführen einer landwirtschaftlichen Leistung in Abhängigkeit der ausgewählten Prozessinformationen (560).

2. Verfahren nach den vorhergehenden Anspruch,
**dadurch gekennzeichnet, dass** die Daten zumindest teilweise mittels Erfassungsvorrichtungen einer Landmaschine erfasst werden.

3. Verfahren nach einem der vorhergehenden Ansprüche,
**dadurch gekennzeichnet, dass** zumindest die folgenden erfassten Daten zu dem Kontextprofil weiterverarbeitet werden:
- Identität, Position und Betriebszustand einer Landmaschine (6, 12, 15),
- Zeitinformationen.

4. Verfahren nach dem vorhergehenden Anspruch,
**dadurch gekennzeichnet, dass** weiterhin die folgenden erfassten Daten zu dem Kontextprofil weiterverarbeitet werden:
- Betriebsparameter einer Landmaschine und/oder
- auf die landwirtschaftliche Leistung bezogene Leistungskennwerte und/oder
- Guteigenschaften, beispielsweise Eigenschaften eines Ernteguts und/oder eines zu bearbeitenden Guts, und/oder
- Umfeldinformationen, beispielsweise agrarmeteorologische Daten, und/oder
- Identität und/oder Position und/oder Betriebszustand und/oder Betriebsparameter einer oder mehrere weiterer Landmaschinen.

5. Verfahren nach einem der vorhergehenden Ansprüche,
**dadurch gekennzeichnet, dass** die Kontextverarbeitungsregeln (510) umfassen:
- Ergänzen der erfassten Daten und/oder,
- Weiterverarbeiten der Daten mittels eines Algorithmus und/oder
- Vergleichen der Daten mit Soll-Daten und/oder
- Ableiten höherwertiger Informationen aus den erfassen und/oder ergänzten Daten.

6. Verfahren nach dem vorhergehenden Anspruch,
**dadurch gekennzeichnet, dass** die Daten durch Beziehen von Ergänzungsdaten ergänzt werden, wobei die Ergänzungsdaten vorzugsweise von einer anderen Landmaschine, einem zentralen System, einem Diensteanbieter, einer Anwendung, insbesondere einer Farmmanagementanwendung, dem internet (4) und/oder über eine Nutzereingabe bezogen werden.

7. Verfahren nach einem der vorhergehenden Ansprüche,
**dadurch gekennzeichnet, dass** die Kontextverarbeitungsregeln (510) abhängig sind von einer vorgegebenen Zielsetzung, vorzugsweise einer maschinensteuerungstechnischen, sicherheitsrelevanten, betriebswirtschaftlichen, arbeitswirtschaftlichen und/oder informationstechnischen Fragestellung.

8. Verfahren nach einem der vorhergehenden Ansprüche,
**dadurch gekennzeichnet, dass** die landwirtschaftsspezifischen Prozessinformationen (560) umfassen:
- initiierung, Weiterführung, Veränderung, Unterbrechung und/oder Beendigung der Durchführung eines Prozesses und/oder
- Durchführung landwirtschaftlicher Leistungen und/oder
- Betriebsparameter für die Durchführung landwirtschaftlicher Leistungen und/oder
- Datenerfassung während der Durchführung landwirtschaftlicher Leistungen und/oder
- Steuerung von Informationsflüssen.

9. Verfahren nach einem der vorhergehenden Ansprüche,
**dadurch gekennzeichnet, dass** die Prozesszuordnungsregeln (540) umfassen:
- Auswählen von Prozessinformationen (560) mittels eines Algorithmus und/oder
- Auswählen von Prozessinformationen (560) mittels Referenzkontextprofilen und/oder
- Auswählen von Prozessinformationen (560) mittels Muster- und/oder Objekterkennung.

10. Verfahren nach einem der vorhergehenden Ansprüche,
**dadurch gekennzeichnet, dass** die landwirtschaftsspezifischen Prozessinformationen (560) aus einer Mehrzahl von landwirtschaftsspezifischen Prozessinformationen (550) ausgewählt werden.

11. Verfahren nach dem vorhergehenden Anspruch,
**dadurch gekennzeichnet, dass** die Mehrzahl von landwirtschaftsspezifischen Prozessinformationen (550) in Abhängigkeit von einem Initialkontext aus einer größeren Anzahl von Prozessinformationen (210) ausgewählt wird, wobei der Initialkontext ein bestimmtes Kontextprofil ist.

12. Verfahren nach dem vorhergehenden Anspruch,
**dadurch gekennzeichnet, dass** der Initialkontext (530) von einer Landmaschine (6, 12, 15) an ein zentrales System (2) übersandt wird und die in Abhängigkeit von dem Initialkontext (530) aus einer größeren Anzahl von Prozessinformationen (210) ausgewählte Mehrzahl der landwirtschaftsspezifischen Prozessinformationen (550) von dem zentralen System (2) an die Landmaschine (6, 12, 15) übersandt wird.

13. Verfahren nach einem der vorhergehenden Ansprüche,
**dadurch gekennzeichnet, dass** zumindest die folgenden Schritte wiederholt ausgeführt werden:
- Erfassen von Daten,
- Weiterverarbeiten und/oder Ergänzen der erfassten Daten zu einem Kontextprofil) auf Basis von Kontextverarbeitungsregeln.

14. Verfahren nach dem vorhergehenden Anspruch,
**gekennzeichnet durch** den Schritt
- Vergleichen des Kontextprofils (520) mit einem zuvor ermittelten Kontextprofil,
weiterhin **dadurch gekennzeichnet, dass** bei einer Abweichung des Kontextprofils (520) von dem zuvor ermittelten Kontextprofil die folgenden Schritte ausgeführt werden:
- Auswählen von Prozessinformationen (560) in Abhängigkeit von dem Kontextprofil (520) auf Basis von Prozesszuordnungsregeln (540),
- Durchführen einer landwirtschaftlichen Leistung in Abhängigkeit der ausgewählten Prozessinformationen (560).

15. Verfahren nach einem der vorhergehenden Ansprüche,
**gekennzeichnet durch** die Schritte:
- Anzeigen des Kontextprofils (520) und/oder der ausgewählten Prozessinformationen (560) und ggf. Ausgeben eines Signals und/oder
- Anfordern einer Freigabe des Kontextprofils (520) und/oder der ausgewählten Prozessinformationen (560) **durch** einen Nutzer und/oder
- Bereitstellen einer Möglichkeit zur Änderung Kontextprofils (520) und/oder der ausgewählten Prozessinformationen (560) **durch** einen Nutzer.

16. Verwendung eines Verfahrens nach einem der vorhergehenden Ansprüche in einer landwirtschaftlichen Anwendung, insbesondere in einer Landmaschine (6, 12, 15).

17. Verfahren zur Unterstützung der Automatisierung landwirtschaftlicher Leistungen,
mit den Schritten:
- Steuern von Funktionen einer Landmaschine in Abhängigkeit von Prozessinformationen (560),
- Erfassen von Daten, wobei die erfassten Daten zumindest umfassen:
○ Identität der Landmaschinen (6, 12, 15),
○ geografische Position der Landmaschine (6, 12, 15),
○ Betriebszustand der Landmaschine (6, 12, 15),
○ Zeitinformationen,
**gekennzeichnet durch** die Schritte:
- Weiterverarbeiten und/oder Ergänzen der erfassten Daten zu einem Kontextprofil (520) auf Basis von Kontextverarbeitungsregeln (510),
- Bereitstellen einer Mehrzahl landwirtschaftsspezifischer Prozessinformationen (550), wobei die Prozessinformationen zumindest umfassen:
○ Angabe durchzuführender landwirtschaftlicher Leistungen sowie dafür erforderlicher Prozessparameter,
○ Angabe während der Durchführung der landwirtschaftlichen Leistungen zu erfassender Daten, wobei diese zu erfassenden Daten zumindest umfassen:
- Identität der Landmaschine (6, 12, 15),
- geografische Position der Landmaschine (6, 12, 15),
- Betriebszustand der Landmaschine (6, 12, 15),
- Zeitinformationen,
- Auswählen von Prozessinformationen (560) in Abhängigkeit von dem Kontextprofil (520) auf Basis von Prozesszuordnungsregeln (540) und
- Steuern der Landmaschine in Abhängigkeit der ausgewählten Prozessinformationen (560).

18. Landmaschine (6, 12, 15), umfassend
- eine Steuereinheit (610), die ausgebildet ist, landwirtschaftliche Leistungen in Abhängigkeit von Prozessinformationen (560) durchzuführen,
- eine oder mehrere Datenerfassungsvorrichtungen (620), die ausgebildet sind, Daten zu erfassen,
**gekennzeichnet durch**
- eine Datenverarbeitungseinrichtung (5), die ausgebildet ist, die erfassten Daten auf Basis von Kontextverarbeitungsregeln (510) zu einem Kontextprofil (520) weiter zu verarbeiten und/oder zu ergänzen,
- eine Auswahlvorrichtung die ausgebildet ist, Prozessinformationen in Abhängigkeit von dem Kontextprofil (520) auf Basis von Prozesszuordnungsregeln (540) auszuwählen und an die Steuereinheit (610) zu übergeben.

19. System zur Unterstützung der Automatisierung landwirtschaftlicher Leistungen, mit einer Sendeeinheit und einer Empfangseinheit (230), die ausgebildet sind, mit einer oder mehreren Landmaschinen (6, 12, 15) zu kommunizieren, **gekennzeichnet durch**
- eine Vielzahl landwirtschaftsspezifischer Prozessinformationen (210),
wobei die Prozessinformationen (210) einem oder mehreren Initialkontexten (530) zugeordnet sind,
- eine Auswahlvorrichtung (220), die ausgebildet ist, in Abhängigkeit von einem von einer Landmaschine (6, 12, 15) empfangenen Initialkontext (530) aus der Vielzahl landwirtschaftsspezifischer Prozessinformationen (210) eine Mehrzahl der diesem Initialkontext (530) zugeordneten Prozessinformationen (550) auszuwählen und an die Landmaschine (6, 12, 15) zu senden, von der der Initialkontext (530) empfangen wurde.
